# EUROPÄISCHE PATENTANMELDUNG

(11) **EP 3 623 771 A1**
(43) Veröffentlichungstag der Anmeldung: **18.03.2020**
(21) Anmeldenummer: 19196507.8
(22) Anmeldetag: 10.09.2019
(51) Int. Cl.: G01D 11/30, G01P 1/02, G01P 1/12, F16B 41/00

(54) **MANIPULATIONSSCHUTZVORRICHTUNG**

(30) Priorität: 11.09.2018 DE 202018105204 U; 04.09.2019 DE 202019104892 U
(71) Anmelder: Reichert, Volker, 01705 Freital (DE)
(72) Erfinder: Reichert, Volker, 01705 Freital (DE)
(74) Vertreter: Drechsler, Gottfried

(57) **Zusammenfassung**

Die Erfindung betrifft eine Manipulationsschutzvorrichtung zum Schutz von Sensoren gegen deren unberechtigten Austausch oder gegen den Versuch diese zu manipulieren.

Aufgabe ist es eine Manipulationsschutzvorrichtung zum Schutz von Sensoren zu schaffen, welche universell für verschiedene Bauformen von Sensoren einsetzbar, konstruktiv einfach, leicht montierbar und absolut manipulationssicher und nicht zerstörungsfrei demontierbar aufgebaut ist.

Bei der Manipulationsschutzvorrichtung ist am Sensor 1 eine Sensorlasche 2 angeordnet. In dieser Sensorlasche 2 ist seitlich eine Sensorlaschenöffnung 3 ausgebildet. Durch die Sensorlaschenöffnung 3 ist ein einsteckbares oder einschraubbares Befestigungselement 5 bis in das Gehäuse 13 geführt, an oder in dem der Sensor befestigt ist und die gewünschten Daten ermittelt. Unter dem Befestigungselement 5 ist eine Distanz- und Zentrierscheibe 6 mit einer drehbaren Feder 8 angeordnet, oder der ringförmige Teil der drehbaren Feder 8 ist einteilig verdickt ausgeführt, so dass die Form und die Abmessung der Distanz und Zentrierscheibe in den ringförmigen Teil integriert ist. Die drehbare Feder 8 ist mittels eines Distanz- und Zentrierscheibenflansches 7 oder mittels eines Absatzes seiner verdickten Form oder mittels eines Absatzes im Befestigungselement 5 in seiner Lage positioniert angeordnet und geführt. An der auf dem Distanz- und Zentrierscheibenflansch drehbar geführten Feder 8 oder an der einteiligen drehbar geführten Feder 8 sind vorzugsweise zwei oder gegebenenfalls mehrere abgewinkelte Seitenschenkel 9 ausgebildet. In den Seitenschenkeln 9 sind Einrastöffnungen 10 so eingebracht, dass in die Einrastöffnungen 10 die Einrasthaken 11 einer Schutzkappe 12 eingreifen. Im Ergebnis entsteht jeweils eine formschlüssige nicht zerstörungsfrei lösbare Befestigung sowohl der Schutzkappe 12 einschließlich des Sensors 1 mit dem Gehäuse13.

## Beschreibung

Die Erfindung betrifft eine Manipulationsschutzvorrichtung zum Schutz von Sensoren gegen deren unberechtigten Austausch oder gegen den Versuch diese zu manipulieren.

Es ist allgemein bekannt Schaltkästen, Sensoren, Messgeräte oder Messfühler, Sicherheitsobjekte oder anderweitige Gegenstände gegen unberechtigten Eingriff mit besonderen Sicherheitsvorrichtungen gegen Manipulationen zu sichern. In der Regel geschieht das mittels zusätzlich angebrachter Plomben, welche definitiv bei unberechtigtem Eingriff oder beim Ausbau vorgenannten Dinge zerstört werden müssen. Eine beschädigte fehlerhafte oder gar fehlende Plombe dokumentiert zuverlässig einen nicht berechtigten Eingriff in das vorgeschriebene Sicherheitskonzept.

So sind beispielsweise gewerblich genutzte Nutzfahrzeuge, wie insbesondere Busse oder LKW oder auch Fahrzeuge der Kommunaltechnik aufgrund gesetzlicher Vorschriften mit Tachochraphen auszurüsten. In der Regel arbeiten die Tachochraphen mit Drehimpulsgebern zur Erfassung der Wegstrecke und der tatsächlich gefahrenen Geschwindigkeit. Die Tachographen sind mit den jeweiligen Sensoren (Impulsgebern) im Motorblock über Kabel verbunden. Zur Sicherheit gegen Manipulationen sind die Impulsgeber mit dem Motorblock, insbesondere mit dem Getriebegehäuse, mittels drahtgebundener Plomben gesichert. Dies soll sowohl die Manipulation des Impulsgebers selbst als auch das unberechtigte Entfernen des Impulsgebers sicher verhindern. Dies ist notwendig um die Messwerte nicht verfälschen zu können. Oftmals wird insbesondere versucht die tatsächlichen Fahr- und Ruhezeiten oder die Fahrgeschwindigkeit zu verändern.

Verdrahtete Plomben haben Nachteile in der Anbringung, zudem können diese leicht durch unbeabsichtigte Bewegungen oder diverse verwirbelte Fremdkörper beschädigt werden. So ist es beispielsweise bereits aufwendig den Draht in die angebrachten Öffnungen am oder im Motorblock einzufädeln und dessen beide Enden manipulationssicher dauerhaft zu verbinden. Außerdem ist das Anordnen entsprechender Ösen zum Einbringen des erforderlichen Sicherheitsfadens oder Plombendrahtes relativ aufwendig.

Der Erfindung liegt die Aufgabe zu Grunde eine Manipulationsschutzvorrichtung zum Schutz von Sensoren zu schaffen, welche universell für verschiedene Bauformen von Sensoren einsetzbar, konstruktiv einfach, leicht montierbar und absolut manipulationssicher und nicht zerstörungsfrei demontierbar aufgebaut ist.

Die Aufgabe wird durch die Merkmale des ersten Schutzanspruches gelöst. Vorteilhafte Ausgestaltungen sind Bestandteil der rückbezüglichen Unteransprüche. Bei der neuartigen Manipulationsschutzvorrichtung zum Schutz von Sensoren gegen Manipulationen zur Befestigung an einem Gehäuse mit einer Schutzkappe ist am Sensor 1 eine Sensorlasche 2 angeordnet. In dieser Sensorlasche 2 ist seitlich eine Sensorlaschenöffnung 3 ausgebildet. Durch die Sensorlaschenöffnung 3 ist ein einsteckbares oder einschraubbares Befestigungselement 5 bis in das Gehäuse 13 geführt, an oder in dem auch der Sensor befestigt ist und die gewünschten Daten ermittelt. Unter dem Befestigungselement 5 ist eine Distanz- und Zentrierscheibe 6 mit einer drehbaren Feder 8 angeordnet, oder der ringförmige Teil der drehbaren Feder 8 ist einteilig verdickt ausgeführt, so dass die Form und die Abmessung der Distanz und Zentrierscheibe in den ringförmigen Teil integriert ist. Die drehbare Feder 8 ist mittels eines Distanz- und Zentrierscheibenflansches 7 oder mittels eines Absatzes seiner verdickten Form oder mittels eines Absatzes im Befestigungselement 5 in seiner Lage positioniert angeordnet und geführt. An der auf dem Distanz- und Zentrierscheibenflansch drehbar geführten Feder 8 oder an der einteiligen drehbar geführten Feder 8 sind vorzugsweise zwei oder gegebenenfalls mehrere abgewinkelte Seitenschenkel 9 ausgebildet. In den Seitenschenkeln 9 sind Einrastöffnungen 10 so eingebracht, dass in die Einrastöffnungen 10 die Einrasthaken 11 einer Schutzkappe 12 eingreifen. Im Ergebnis entsteht jeweils eine formschlüssige nicht zerstörungsfrei lösbare Befestigung sowohl der Schutzkappe 12 einschließlich des Sensors 1 mit dem Gehäuse13.

In einer zweiten Ausführung ist die Schutzkappe zweiteilig ausgeführt. Dabei ist oberhalb der Sensorlasche 2 eine den Sensor 1 umgreifende federnde Schutzkappenschelle 15 angeordnet. Die Schutzkappenschelle 15 ist im Querschnitt betrachtet so geformt, dass diese mehr als die Hälfte des Umfanges des Sensors 1, d. h. des Sensorgehäuses umgreift. In der Schutzkappenschelle 15 sind Einrastöffnungen 10 eingebracht in die ein federndes Schutzkappenteil 16 mittels korrespondierend angeordneter Einrasthaken 11 eingreift. Die Einrastöffnungen 10 und die Einrasthaken 11 können bei Bedarf auch vertauscht in den Schutzkappenteilen angeordnet werden. Dadurch werden die Schutzkappenschelle 15 und das Schutzkappenteil 16 so miteinander verbunden, dass jeweils eine formschlüssige nicht zerstörungsfrei lösbare Verbindung ausgebildet ist. Diese neuartige Manipulationsschutzvorrichtung ist universell für verschiedene Bauformen von Sensoren anwendbar, ist konstruktiv einfach aufgebaut, lässt sich einfach herstellen und leicht montieren und ist absolut manipulationssicher. Sollte der Sensor irgendwie demontiert werden, wird die Manipulationsschutzvorrichtung zwangsläufig zerstört und jegliche unberechtigte Demontage oder ein Eingriffsversuch in den Sensor 1 ist zweifelsfrei nachweisbar.

Von Vorteil ist es, wenn bei der ersten Ausführung der Manipulationsschutzvorrichtung die Seitenschenkel 9 oben an ihren Enden nach innen abgebogen ausgebildet sind. Damit wird das Aufklicken der Schutzkappe 12 einfacher, da eine Selbstjustierung bereits beim Aufstecken erfolgt.

In einer bevorzugten Ausbildung der ersten Ausführung der Manipulationsschutzvorrichtung zum Schutz von Sensoren sind die Seitenschenkel 9 und die Einrastöffnungen 10 symmetrisch gegenüber liegend angeordnet. Das ist sinnvoll weil dann die Montage der Schutzkappe 12 in zwei Stellungen erfolgen kann.

Prinzipiell können einzelne oder alle Bauteile der Manipulationsschutzvorrichtung speziell gekennzeichnet sind. Solche Kennzeichnungen sind beispielsweise Seriennummern oder Strichkodes.

Auch können aus Sicherheitsgründen für sensible, wichtige Manipulationsschutzvorrichtung zum Schutz der Sensoren oder zum Schutz gegen jeglichen Austausch oder Nachahmungen einzelne oder alle Bauteile der Manipulationsschutzvorrichtung mit einem RFID-Chip gekennzeichnet sein.

Möglich ist es auch in der Schutzkappe 12 oder in die Schutzkappenteile 15 und/oder 16 der Manipulationsschutzvorrichtung einen sichtbaren Kennzeichenfaden ein zu arbeiten, oder dass diese auch mit einem zusätzlichen Material beschichtet sind, welches unter UV Bestrahlung leuchtet.

Je nach Ausführung können die Einrastöffnungen 10 quadratisch, rechteckförmig oder rund ausgebildet sein, in welche dann darauf abgestimmt geeignete Einrasthaken der Manipulationsschutzvorrichtung eingrasten.

Am sinnvollsten ist es, wenn das Befestigungselement 5 der Manipulationsschutzvorrichtung zum Schutz von Sensoren als eine Schraube ausgebildet ist.

Je nach Wunsch des Anwenders kann die Schutzkappe 12 von oben betrachtet rund, rechteckig oder quadratisch oder anderweitig ausgebildet sen.

Von Vorteil ist es bei der neuartigen Manipulationsschutzvorrichtung, wenn die Feder 8 aus Metall ausgebildet ist oder die Schutzkappe 12 oder Schutzkappeschelle 15 oder das Schutzkappenteil 16 zumindest einen federnden Metallkern besitzt.

Wenn bei der Manipulationsschutzvorrichtung zum Schutz von Sensoren der ringförmige Teil der Feder 8 oder ein Seitenschenkel 9 geschlitzt ausgebildet ist, dass bedeutet der Schlitz ist durchgängig bis zur Bohrung der Feder 8 geführt, entsteht eine offene Feder 8 die von der Seite über das Befestigungselement 5 (in der Regel eine Schraube) geschoben werden kann. Damit erleichtert sich insbesondere die Montage bei nicht einsehbaren Getriebegehäusen bei einer Nachrüstung für bereits ohne eine derartige Manipulationsschutzvorrichtung ausgelieferte nachzurüstende Fahrzeuge.

Ist bei der Manipulationsschutzvorrichtung zum Schutz von Sensoren im ringförmigen Teil der Feder 8 beispielsweise um 90° oder bis zu 180° versetzt oder dem anderen Seitenschenkel 9 eine Aussparung als eine Art Festkörpergelenk angeordnet, lässt sich die Federwirkung erhöhen, bzw. die Montage vereinfacht sich weiter.

Es ist auch möglich dass bei der Manipulationsschutzvorrichtung zum Schutz von Sensoren die Breite des Schlitzes im ringförmigen Teil der Feder 8 dem Durchmesser der Bohrung in der Feder 8 entspricht. Die Feder 8 besteht hier vorzugsweise aus einem metallischen Werkstoff und ist einfach als Stanzteil oder als 3D-Druckteil auch mit größerer Wandstärke des ringförmigen Teils der Feder 8 herstellbar. Bei dieser Ausführung wird die seitliche Montage noch einfacher.

Um bei der Montage in nicht einsehbaren Bereichen die Feder 8 genau positionieren zu können, ist es vorteilhaft, wenn an der Manipulationsschutzvorrichtung zum Schutz von Sensoren an der Feder 8 ein zusätzlicher Ausrichtsteg angeordnet ist, welcher an einer ausgebildeten Rippe des Sensorgehäuses angelegt werden kann, so dass bei der seitlichen Montage eine Führung der Feder 8 erfolgt und die Montage genau und schnell erfolgen kann. Dabei kann vorteilhafterweiset das Befestigungselement 5 im Gehäuse 13 bereits locker befestigt sein, so dass sich ein Spalt zwischen der Unterseite des Kopfes des Befestigungselementes 5 und der Sensorlasche 2 im Bereich der Sensorlaschenöffnung 3 bildet, in welchen die Feder 8 seitlich montiert werden kann. Dann wird das Befestigungselement 5 je nach Ausführung befestigt (bei Ausführung als Schraube fest angezogen).

Des Weiteren können in den Seitenschenkeln 9 der Feder 8 der Manipulationsschutzvorrichtung zum Schutz von Sensoren Öffnungen zum Einrasten der Schutzkappe 12 angeordnet werden, wobei diese so befestigt ist, das der Versuch der Demontage zweifelsfrei zur Zerstörung der Manipulationsschutzvorrichtung führt. Zudem verhindert die Schutzkappe auch die Verschmutzung in diesem Bereich.

Diese neuartige Manipulationsschutzvorrichtung zum Schutz von Sensoren ist problemlos für verschiedenste Bauformen bzw. Ausführungen oder Baugrößen von Sensoren einsetzbar. Sie ist konstruktiv einfach aufgebaut, leicht herstellbar, schnell montierbar und gegen jeglichen Manipulationsversuch sicher, d. h. jeglicher Demontageversuch oder Eingriff in den Sensor oder sein Gehäuse führt zwangsläufig zur Zerstörung der Schutzkappe 12. Mit der Zerstörung der Schutzkappe 12 wird jeder Manipulationsvorgang sichtbar bzw. eine teil- oder vollständige Zerstörung dokumentiert jeglichen Täuschungsversuch. Mit dieser Art der Manipulationsschutzvorrichtung entsteht eine aus wenigen Teilen bestehenden Plombe, bestehend aus einem einfachen Befestigungselement 5, wie insbesondere eine einfache Gewindeschraube, einer Schutzkappe 12, einer Feder 8 und einer Distanz- und Zentrierscheibe 6. Dadurch wird das Herausdrehen der Befestigungsschraube welche mit einem Sensorgehäuse gekoppelt ist, beispielsweise aus einem Getriebegehäuse verhindert. In der einfachsten Ausführung erfolgt die Verrastung der Schutzkappe 12 mittels zweier Einrasthaken 11 in zwei Einrastöffnungen 10 einer Metall-Feder. Damit wird eine axiale Fixierung der Schutzkappe 12 auf dem Schraubenkopf erreicht. Die Schutzkappe 12 ist um die Schraubenachse nach dem Aufsetzen leicht drehbar und es kann keine äußere Kraft oder ein äußeres Drehmoment direkt auf das Befestigungselement 5, d. h. die Schraube einwirken. Es ist nicht möglich das Befestigungselement 5 in irgendeiner Art und Weise zu lösen bzw. herauszudrehen. Der damit verbundene Sensor 1 kann beispielsweise aus einem Getriebegehäuse nicht mehr unberechtigt entfernt werden. Mögliche Werkstoffe für die verschiedenen Teile der Manipulationsschutzvorrichtung können Metall, verschiedene Kunststoffe, Keramiken oder ähnliche Materialkombinationen sein.

Die Erfindung soll nachstehend an Hand der Figuren 1 bis 7 Figuren näher erläutert werden.
**Fig. 1A** zeigt einen Sensor 1 mit einer erfindungsgemäßen Manipulationsschutzvorrichtung
**Fig. 1B** zeigt eine seitlich angeordnete Sensorlaschenöffhung 3 in der Sensorlasche 2
**Fig. 2** zeigt eine zugehörige Draufsicht auf eine Manipulationsschutzvorrichtung
**Fig. 3** zeigt einen Sensor in einem Gehäuse mit einer zweiten Ausführungsmöglichkeit der Manipulationsschutzvorrichtung
**Fig. 4** zeigt eine Schnittdarstellung durch eine Manipulationsschutzvorrichtung
**Fig. 5** zeigt eine Schrägansicht einer vorteilhaften Ausführung einer Feder 8
**Fig. 6** zeigt eine Distanz- und Zentrierscheibe 6
**Fig. 7** zeigt eine rechteckig ausgebildete Schutzkappe 12

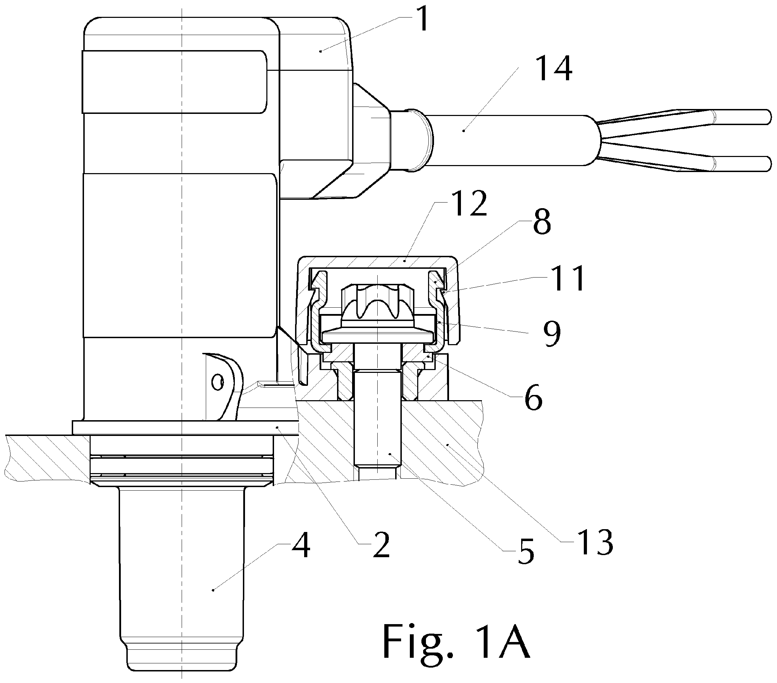

In der **Fig. 1A** ist ein Sensor 1 mit einer erfindungsgemäßen und damit zerstörungsfreien Manipulationsschutzvorrichtung gezeigt. Der Impulsgeberkopf 4 eines Sensors 1 ist in einem Sensorgehäuse, welches einstückig ausgeführt ist, eingebracht. Am Sensor 1 ist an seinem Ende außen ein Kabel 14 für die Datenermittlung und Übertragung angeschlossen. Anstelle eines Kabels 14 kann die Datenübertragung auch über andere Schnittstellen, wie beispielsweise Funk oder Bluetooth erfolgen. Am Sensor 1 ist eine Sensorlasche 2 (Sensorgehäuse und Sensorlasche sind ein Bauteil) stoffschlüssig angeordnet. Seitlich in der Sensorlasche 2 ist neben dem Sensorgehäuse eine Sensorlaschenöffhung 3 angeordnet. Der Sensor 1 wird so montiert, dass seine Sensorlasche 2 direkt auf einem Gehäuse13, z. B. einem Getriebegehäuse eines LKW aufliegt und kein Spalt zwischen Sensorlasche 2 und Gehäuse 13 entsteht. Die Sensorlasche 2 ist durch die Sensorlaschenöffnung 3 hindurch mit dem Gehäuse 13 mittels eines Befestigungselementes 5, hier beispielsweise mittels einer einfachen Gewindeschraube verbunden. Zwischen Schraubenkopf und Sensorlasche 2 ist eine Distanz- und Zentrierscheibe 6 angeordnet. An der Distanz- und Zentrierscheibe 6 ist ein Distanz- und Zentrierscheibenflansch 7 ausgebildet. Die Distanz- und Zentrierscheibe 6 kann auch entfallen, wenn anstelle der Distanz und Zentrierscheibe 6 mit dem Zentrierscheibenflansch 7 der ringförmige Teil der Feder 8 verdickt (größere Wandstärke) ausgebildet ist und die Form und die Abmessungen entsprechend ausgebildet sind. dann übernimmt das verdickte ringförmige Teil die Funktion der Distanz- und Zentrierscheibe 6. Bei zweiteiliger Ausführung ist auf diesem Distanz- und Zentrierscheibenflansch 7 eine Feder 8 gelagert und geführt, so dass diese drehbar ist, d. h. die Bohrung in der Feder 8 ist so dimensioniert, dass die Feder 8 auf dem Distanz- und Zentrierscheibenflansch 7 drehbar ist. Die Feder 8 ist gegen herausziehen durch den Kopf des Befestigungselements 5 gesichert. An der Feder 8 sind hier zwei Seitenschenkel 9 nach oben seitlich am Befestigungselementkopf, hier einem Schraubenkopf, vorbei und ohne diesen zu berühren abgewinkelt ausgeführt. Generell sind aber auch mehr als zwei Seitenschenkel 9 ausführbar. In jedem der federnden Seitenschenkel 9 ist mindestens eine Einrastöffnung 10 ausgebildet. In der Schutzkappe 12 sind an korrespondierenden Stellen Einrasthaken 11 (hier genau 2) angeordnet. Wird die Schutzkappe 12 aufgesetzt und nach unten gedrückt, federn die Seitenschenkel 9 nach innen in Richtung des Befestigungselementes 5 ein. Ist die Schutzkappe 12 weit genug in Richtung des Gehäuses 13 gedrückt, rasten die Einrasthaken 11 in die Einrastöffnungen 10 der auf dem Distanz- und Zentrierscheibenflansch drehbaren Feder 8 ein. Die Feder 8 federt radial nach außen zurück, entspannt sich und die Schutzkappe 12 ist so fest fixiert, dass diese nicht mehr entfernt werden kann. Um den Sensor 1 nun wieder aus dem Gehäuse 13 entfernen zu können, muss also zunächst die Schutzkappe 12 zerstört werden, ehe das Befestigungselement 5 aus dem Gehäuse 13 gelöst (vorzugsweise herausgeschraubt) werden kann und der Sensor 1 entnommen werden kann. Am Gehäuse des Sensors 1 ist hier auch eine Öse für den üblichen Plombendraht zu sehen. Aber diese Öse ist in Zukunft nicht mehr erforderlich.

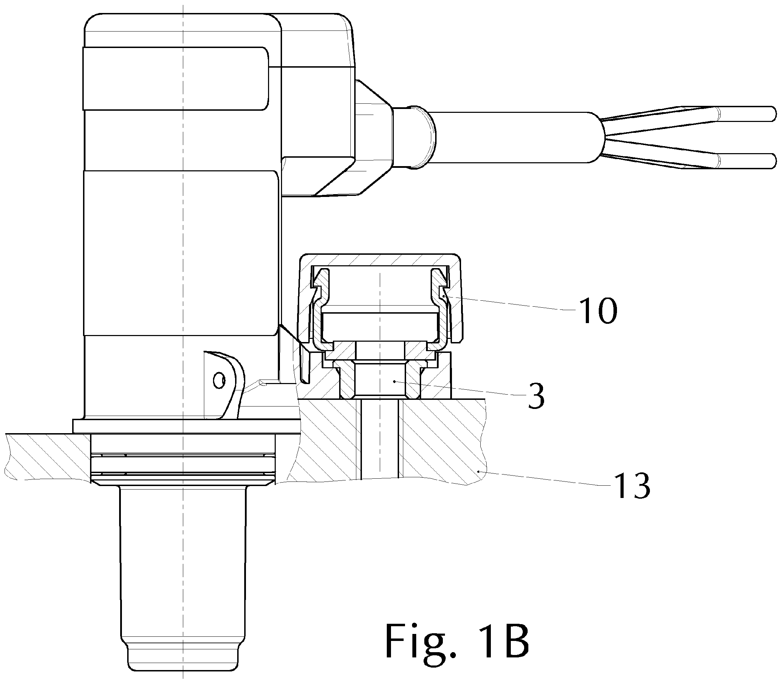

**Fig. 1B** zeigt die seitliche Anordnung der Sensorlaschenöffhung 3 mit einer zusätzlichen eingesetzten Reduktionsbuchse, um die Sensorlaschenöffhung 3 an die jeweils eingesetzte Gewindeschraube anzupassen.

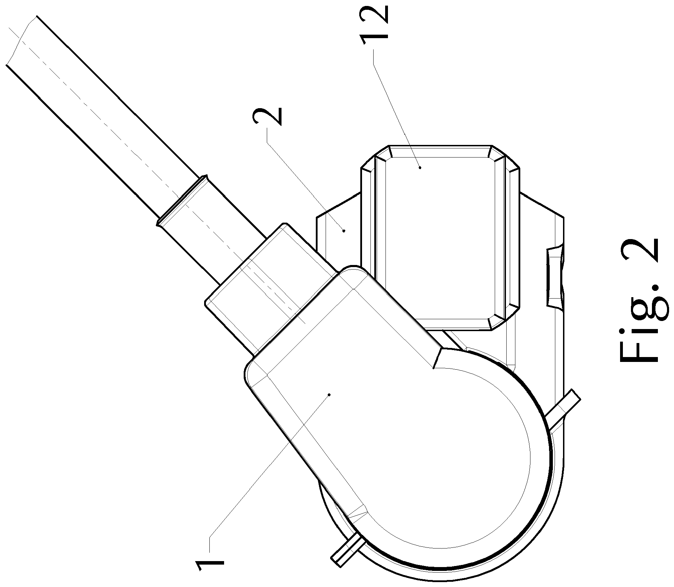

**Fig. 2** zeigt eine zugehörige Draufsicht auf eine Manipulationsschutzvorrichtung mit einem Sensor 1, der daran stoffschlüssig angeordneten Sensorlasche 2 und der befestigten, abdeckenden und gesicherten Schutzkappe 12, wie sie beispielsweise auf einem Getriebegehäuse eines LKW zur gesicherten Ermittlung der Fahrtdaten eines LKW angeordnet werden kann.

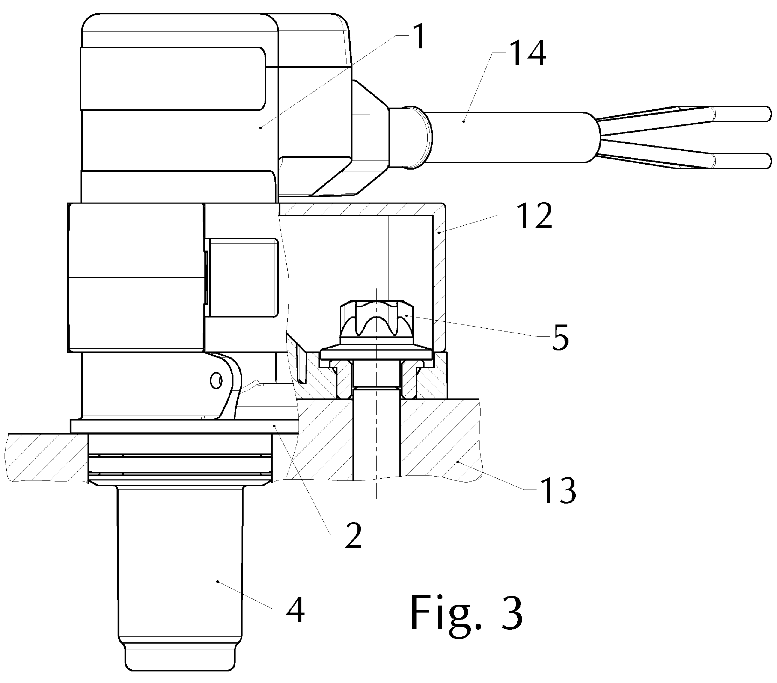

In der **Fig. 3** ist ein Sensor 1 in einem Gehäuse mit einer zweiten Ausführungsmöglichkeit der neuartigen Manipulationsschutzvorrichtung abgebildet. Der Impulsgeberkopf 4 des Sensors 1 ist in einem einstückigen Sensorgehäuse eingebracht. Am Sensor 1 ist an seinem Ende außen ein Kabel 14 für die Datenermittlung und Übertragung angeschlossen. Am Sensor 1 ist auch hier eine Sensorlasche 2 (Sensorgehäuse und Sensorlasche sind ein Bauteil) stoffschlüssig angeordnet. Seitlich in der Sensorlasche 2 ist neben dem Sensorgehäuse eine Sensorlaschenöffhung 3 angeordnet. Der Sensor 1 wird so montiert, dass seine Sensorlasche 2 direkt auf einem Gehäuse13, z. B. einem Getriebegehäuse eines LKW aufliegt und kein Spalt zwischen Sensorlasche 2 und Gehäuse 13 entsteht. Die Sensorlasche 2 ist durch die Sensorlaschenöffhung 3 hindurch mit dem Gehäuse 13 mittels einer Gewindeschraube 5 verbunden. Zwischen Schraubenkopf und Sensorlasche 2 ist eine Distanz- und Zentrierscheibe 6 angeordnet.

Über den Gehäusemantel des Sensors 1 ist von einer Seite her eine federnde Schutzkappenschelle 15 übergeschoben, so dass diese den Gehäusemantel mehr als zur Hälfte umgreift. Günstig ist es, wenn die Schutzkappenschelle 15 den Gehäusemantel bis maximal zu drei/vierteln umgreift. In je einer geschützten Tasche sind in jedem Schenkel der Schutzkappenschelle 15 nutartig Einrastöffnungen 10 angeordnet. Von der anderen Seite, d. h. von der Seite her in welche sich die Sensorlasche 2 erstreckt, wird ein federndes Schutzkappenteil 16 seitlich eingeschoben, bis dessen an den Enden diesen Schenkel ausgebildeten Einrasthaken 11 in die Einrastöffnungen 10 einrasten. Dabei ist die axiale Höhe der federnd ausgebildeten Schutzkappenschelle 15 und des federnden Schutzkappenteils 16 so gewählt ,das diese mit der seitliche Kabelabstützung harmoniert, so dass diese beiden Teile axial nicht auf dem Mantel des Sensorgehäuses verschoben werden können. Damit ist die Gewindeschraube 5 definitiv nicht von außen zugänglich. Es ist auch eine andere Lösung denkbar, wo die beiden zu verriegelnden Teile (Schutzkappenschelle 15 und Schutzkappenteil 16) in eine umlaufend angeordnete Nut eingreifen oder eine umlaufende Wulst angeordnet ist, so das ein axiales verschiebender dieser nicht lösbar verriegelten Teile unmöglich ist.

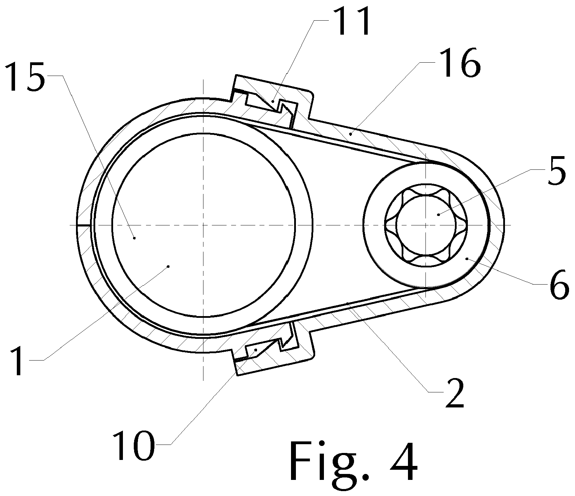

**Fig. 4** zeigt eine Schnittdarstellung durch diese andere zweiteilige Ausführungsvariante der Manipulationsschutzvorrichtung. Die Schutzkappenschelle 15 besteht aus federndem Material, so dass diese über den zylindrischen Mantel des Sensorgehäuses geschoben werden kann. Dabei umgreift die Schutzkappenschelle 15 hier mehr als die Hälfte des Gehäusemantels des Sensors 1. In der Schutzkappenschelle 15 ist an den Enden auf jeder Seite eine Einrastöffnung 10, hier eine nutartige Vertiefung angeordnet. Das federnde Schutzkappenteil 16 wird seitlich so zugeführt und über das montierte Befestigungselement geschoben, so dass die beiden Einrasthaken 11 in die nutartige Vertiefung der Schutzkappeschelle 15 einrasten. Dabei schützt das Schutzkappenteil 16 das Befestigungselement 5 gegen jeglichen Versuch dieses zu lösen, z. b. heraus zu schrauben.

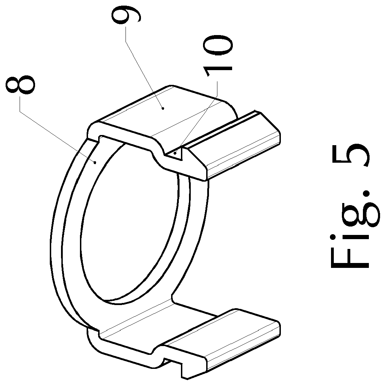

**Fig. 5** zeigt eine Schrägansicht einer vorteilhaften Ausführung einer auf dem Distanz- und Zentrierscheibenflansch 7 drehbar geführten Feder 8. An dem Federbund sind außen zwei Seitenschenkel 9 symmetrisch gegenüber liegend rechtwinklig abgebogen ausgebildet. Am Ende den Seitenschenkel 9 ist je eine nutartige Einrastöffnung 10 angeordnet. In diese nutartige Einrastöffnung 10 greift der Einrasthaken 11 der Schutzkappe 12 ein. Bei diesem speziellen Ausführungsbeispiel ist am Ende der der Seitenschenkel eine keilförmige Schräge ausgebildet, welche gegen eine Schräge des Einrasthakens 11 bei der Montage der Schutzkappe aufläuft und die Seitenschenkel 9 zwangsweise nach radial nach innen zum Befestigungselement hin drückt. Dies erfolgt soweit bis die gegeneinander laufenden Schrägen nicht mehr im Eingriff sind und der Einrasthaken 11 in die Einrastöffnung 10 d. h. die nutartige Öffnung einrastet.

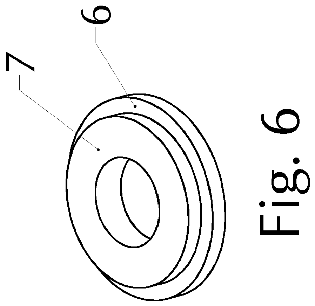

In der **Fig. 6** ist eine Distanz- und Zentrierscheibe 6 mit dem Distanz- und Zentrierscheibenflansch 7 abgebildet auf dem die Feder 8 drehbar gelagert ist.

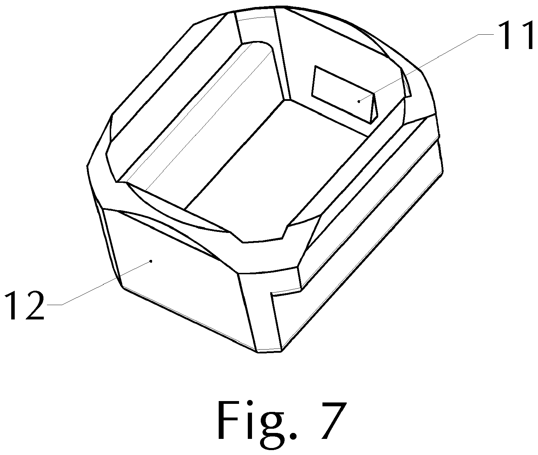

In der **Fig. 7** ist eine Innenansicht einer möglichen Ausführung einer rechteckigen Schutzkappe 12 gezeigt. In der rechteckig ausgebildeten Schutzkappe 12 ist innen symmetrisch gegenüberliegend je ein Einrasthaken 11 angeordnet. Seine Schräge bewirkt das nach innen Biegen der Seitenschenkel 9 der Feder 8. Erreicht die gerade Fläche des Einrasthakens 11 die gerade Fläche der Einrastöffnung 10 werden die beiden Seitenschenkel der Feder 8 radial durch die Federwirkung nach innen bewegt und die Schutzkappe 12 ist fest verriegelt und von außen nicht mehr zerstörungsfrei demontierbar. Die Schutzkappe 12 kann nun mit der eingerasteten Feder 8 beliebig gedreht werden ohne das eine Krafteinwirkung auf den Kopf des Befestigungselements 5, hier einen Schraubenkopf ausgeübt werden kann. Es sind auch runde Konstruktionen der Feder 8 und der Schutzkappe 12 ausführbar.

Erfolgt irgend eine Krafteinleitung um an des Befestigungselement 5 zu gelangen, werden die Schutzkappe 12 oder die beiden verriegelten Teile (Schutzkappenschelle 15 und Schutzkappenteil 16) zwangsläufig zerstört. Auch anderweitige Manipulationen um an den Impulsgeberkopf 4 zu kommen oder diesen zu manipulieren sind generell ausgeschlossen, weil dann Schäden auch am einstückigen Gehäuse sichtbar sind. sichtbar.

### Bezugszeichenliste

- 1: Sensor
- 2: Sensorlasche
- 3: Sensorlaschenöffhung
- 4: Impulsgeberkopf
- 5: Befestigungselement (Schraube)
- 6: Distanz- und Zentrierscheibe oder verdickter
- 7: Distanz und Zentrierscheibenflansch
- 8: Feder
- 9: Seitenschenkel
- 10: Einrastöffnung
- 11: Einrasthaken
- 12: Schutzkappe
- 13: Gehäuse, (Motor- oder Getriebeblock)
- 14: Kabel
- 15: federnde Schutzkappenschelle
- 16: federndes Schutzkappenteil

## Patentansprüche

1. Manipulationsschutzvorrichtung zum Schutz von Sensoren gegen Manipulationen zur Befestigung an einem Gehäuse,
Befestigung an einem Gehäuse mit einer Schutzkappe,
**dadurch gekennzeichnet,**
**dass** am Sensor (1) eine Sensorlasche (2) angeordnet ist,
seitlich in der Sensorlasche (2) eine Sensorlaschenöffhung (3) ausgebildet ist,
durch die Sensorlaschenöffhung (3) ein einsteckbares oder einschraubbares Befestigungselement (5) bis in das Gehäuse (13) geführt ist,
- unter dem Befestigungselement (5) eine Distanz- und Zentrierscheibe (6) mit einer drehbaren Feder (8) angeordnet ist,
oder der ringförmige Teil der drehbaren Feder (8) einteilig verdickt ausgeführt ist, so dass die Form und die Abmessung der Distanz und Zentrierscheibe in den ringförmigen Teil integriert ist,
die drehbare Feder (8) mittels eines Distanz- und Zentrierscheibenflansches (7) oder mittels eines Absatzes seiner verdickten Form oder mittels eines Absatzes im Befestigungselement (5) in seiner Lage positioniert angeordnet ist,
an der Feder (8) zwei oder mehrere abgewinkelte Seitenschenkel (9) angeordnet sind,
in den Seitenschenkeln (9) Einrastöffnungen (10) angeordnet sind,
in die Einrastöffnungen (10) Einrasthaken (11) einer Schutzkappe (12) eingreifen,
- oder die Schutzkappe zweiteilig ausgeführt ist,
wobei oberhalb der Sensorlasche (2) eine den Sensor (1) umgreifende federnde Schutzkappenschelle (15) angeordnet ist,
in die ein federndes Schutzkappenteil (16) eingreift,
wobei in der Schutzkappenschelle (15) und dem Schutzkappenteil 16 Einrastöffnungen (10) und korrespondierend angeordneter Einrasthaken (11) so angeordnet sind,
**dass** jeweils eine formschlüssige nicht zerstörungsfrei lösbare Befestigung der Schutzkappe (12) einschließlich des Sensors (1) ausgebildet ist.

2. Manipulationsschutzvorrichtung zum Schutz von Sensoren nach Anspruch 1,
**dadurch gekennzeichnet,**
**dass** die Seitenschenkel (9) oben an ihren Enden nach innen abgebogen ausgebildet sind.

3. Manipulationsschutzvorrichtung zum Schutz von Sensoren nach Anspruch 1 und 2,
**dadurch gekennzeichnet,**
**dass** die Seitenschenkel (9) und die Einrastöffnungen (10) symmetrisch gegenüber liegend angeordnet sind.

4. Manipulationsschutzvorrichtung zum Schutz von Sensoren nach Anspruch 1,
**dadurch gekennzeichnet,**
**dass** einzelne oder alle Bauteile der Manipulationsschutzvorrichtung speziell gekennzeichnet sind.

5. Manipulationsschutzvorrichtung zum Schutz von Sensoren nach Anspruch 4,
**dadurch gekennzeichnet,**
**dass** einzelne oder alle Bauteile der Manipulationsschutzvorrichtung mit einem RFID-Chip gekennzeichnet sind.

6. Manipulationsschutzvorrichtung zum Schutz von Sensoren nach Anspruch 4,
**dadurch gekennzeichnet,**
**dass** in der Schutzkappe (12) oder dem Schutzkappenteil (16) ein sichtbarer Kennzeichenfaden eingearbeitet ist und/oder dass die Schutzkappe (12) oder das Schutzkappenteil (16) mit einem Stoff beschichtet ist, der unter UV Bestrahlung leuchtet.

7. Manipulationsschutzvorrichtung zum Schutz von Sensoren nach Anspruch 1,
**dadurch gekennzeichnet,**
**dass** die Einrastöffnungen (10) quadratisch, rechteckförmig oder rund ausgebildet sind

8. Manipulationsschutzvorrichtung zum Schutz von Sensoren nach Anspruch 1,
**dadurch gekennzeichnet,**
**dass** das Befestigungselement (5) als eine Schraube ausgebildet ist.

9. Manipulationsschutzvorrichtung zum Schutz von Sensoren nach Anspruch 4,
**dadurch gekennzeichnet,**
**dass** die Schutzkappe (12) rund, rechteckig oder quadratisch oder anderweitig ausgebildet ist.

10. Manipulationsschutzvorrichtung zum Schutz von Sensoren nach Anspruch 4,
**dadurch gekennzeichnet,**
**dass** die Feder (8) aus Metall ausgebildet ist oder die Schutzkappe (12) oder die Schutzkappeschelle (15) oder das Schutzkappenteil (16) einen federnden Metallkern besitzt.

11. Manipulationsschutzvorrichtung zum Schutz von Sensoren nach Anspruch 1 oder 10,
**dadurch gekennzeichnet,**
**dass** der ringförmige Teil der Feder (8) oder ein Seitenschenkel (9) geschlitzt ausgebildet ist.

12. Manipulationsschutzvorrichtung zum Schutz von Sensoren nach Anspruch 1, 10 oder 11,
**dadurch gekennzeichnet,**
**dass** im ringförmigen Teil der Feder (8) um 90° oder bis zu 180° versetzt oder dem anderen Seitenschenkel (9) eine Aussparung angeordnet ist.

13. Manipulationsschutzvorrichtung zum Schutz von Sensoren nach Anspruch 11,
**dadurch gekennzeichnet,**
**dass** die Breite des Schlitzes im ringförmigen Teil der Feder (8) dem Durchmesser der Bohrung in der Feder (8) entspricht.

14. Manipulationsschutzvorrichtung zum Schutz von Sensoren nach Anspruch 1 oder 10,
**dadurch gekennzeichnet,**
**dass** an der Feder (8) ein Ausrichtsteg angeordnet ist.

15. Manipulationsschutzvorrichtung zum Schutz von Sensoren nach einem der vorstehenden Ansprüche,
**dadurch gekennzeichnet,**
**dass** in den Seitenschenkeln (9) Öffnungen zum Einrasten einer Schutzkappe angeordnet sind.
